# FASCICULE DE BREVET EUROPEEN

(11) **EP 0 352 165 B1**
(45) Date de publication et mention de la délivrance du brevet: **22.09.1993**
(21) Numéro de dépôt: 89401965.2
(22) Date de dépôt: 07.07.1989
(51) Int. Cl.: A01J 25/11, A01J 25/12

(54) **Dispositif de moulage et retournement automatique de moules contenant du caillé**
Vorrichtung zum Formen von Käsestücken und zum automatischen Umdrehen von mit Käsemasse gefüllten Formen
Apparatus for cheese moulding and for automatically turning moulds containing curd

(30) Priorité: 18.07.1988 FR 8809692
(43) Date de publication de la demande: 24.01.1990
(73) Titulaire: SOCIETE ANONYME DES FERMIERS REUNIS, F-75944 Paris Cedex 19 (FR)
(72) Inventeur: Champourlier, Marc, F-94000 Créteil (FR)
(74) Mandataire: Polus, Camille

(56) Documents cités:
- EP-A- 0 235 867
- WO-A-87/00002
- DE-C- 3 701 943
- FR-A- 1 293 674
- FR-A- 2 054 827
- FR-A- 2 528 663

## Description

La présente invention a pour objet un dispositif de remplissage et de retournement automatique de moules contenant du caillé lors de la fabrication de fromages.

Les procédés de fabrication de fromages à pâte molle utilisent du caillé lactique ou mixte, qui peut être égoutté avant ou après moulage.

On entend par caillé égoutté, le caillé dont on a éliminé la totalité ou une partie du lactosérum ; l'égouttage avant moulage s'effectue selon les procédés connus et largement décrits tels que, par exemple, le procédé ALPMA (FROMAT) en fromagerie traditionnelle ou le procédé par ultrafiltration décrit dans le brevet n° 6924555.

La présente invention s'appliquera au caillé égoutté. Après égouttage, le caillé est représenté en portions dosées, moulé et retourné. Ces opérations sont délicates dans la mesure où ces caillés, à ce stade de la fabrication, sont fragiles et friables par manque de cohésion des grains entre eux ; sous l'influence des chocs mécaniques, la structure s'altère notamment par cisaillement ce qui est préjudiciable à la qualité du produit fini : pâte non homogène, trous et ouvertures par exemple.

Aussi le caillé est-il actuellement transféré après égouttage dans un dispositif à tubes de moulage préalable dont le fond est constitué d'une lame mobile ayant une double action de coupe et d'obturateur. Lorsque la lame est effacée, le caillé descend du tube par gravité dans un moule intermédiaire mobile suivant l'axe longitudinal du tube de façon à faire varier progressivement la distance qui sépare l'extrémité inférieure du tube et le moule. Une fois que la quantité de caillé souhaitée est déposée dans le moule, la lame en déplacement sectionne la colonne de caillé issue du tube et bloque la descente du caillé dans ce tube.

Le caillé doit alors être transféré du moule intermédiaire dans le moule définitif et ce dernier doit être retourné sur des claies pour que le caillé poursuive son égouttage.

Un tel transfert du caillé du tube de moulage dans un moule intermédiaire, puis dans un moule définitif, est décrit dans la demande de brevet européen n° 0235867.

Le moule intermédiaire est muni d'un fond amovible et disposé au droit d'un tube d'alimentation. Une fois ce moule rempli de caillé, il est amené avec son fond au-dessus du moule définitif, le fond est rapidement déplacé perpendiculairement à l'axe longitudinal du moule, le caillé chute par gravité dans le moule définitif.

Un tel procédé, objet du brevet pré-cité, entraîne des chocs mécaniques subis par le caillé qui est à ce stade fragile, requiert plusieurs mouvements alternatifs et reste du type discontinu. De plus, il n'assure pas le premier retournement du caillé.

FR-A-2 054 827 décrit un dispositif comprenant une boucle comportant des brins horizontaux superposés sur plusieurs étages transportant des nacelles portant des tubes remplis de lait emprésuré.

Au niveau de l'avant-dernier brin horizontal, des moules à fond perforé sont adaptés sur les tubes de manière à ce que leur orifice soit tourné vers le bas. Ces moules sont ensuite retournés au moment du passage sur le dernier brin assurant ainsi le transvasement du caillé dans ces moules de manière à reproduire les conditions du moulage à la louche.

La présente invention a pour but un dispositif automatique et continu de remplissage de moules intermédiaires, de transfert dans des moules définitifs et de retournement qui supprime tous les chocs mécaniques, peut être piloté par une unité programmable et qui permet le déroulement des étapes en temps masqué.

Ce dispositif de remplissage et de retournement automatique de moules contenant du caillé lors de la fabrication de fromages, comprenant un poste de chargement composé de tubes d'alimentation et de moulage du caillé égoutté par gravité, munis de lames de coupe et d'obturation disposées à leurs extrémités, des moules intermédiaires et des moules définitifs destinés à recevoir respectivement les portions de caille égoutté venant des tubes de moulage et des moules intermédiaires, se caractérise en ce qu'il comprend des moyens de transport se déplaçant suivant une boucle fermée orientée dans un plan vertical, sur lesquels sont fixés et régulièrement espacés les moules intermédiaires comprenant un fond mobile suivant l'axe longitudinal dudit moule et, définissant deux brins horizontaux, supérieur et inférieur, un poste de mise en place des moules définitifs vides disposé au-dessus du brin supérieur et un poste de déchargement des moules définitifs remplis disposé au-dessous du brin inférieur, lesdits moyens de transport comportant en outre un élévateur-descenseur mobile entre deux positions haute et basse de façon a rapprocher alternativement le brin supérieur des postes de chargement et de mise en place des moules définitifs et le brin inférieur du poste de déchargement des moules définitifs.

L'invention va maintenant être décrite en détail selon un mode de réalisation particulier en regard des dessins annexés sur lesquels :
- la Fig. 1 est une vue en élévation latérale du dispositif selon l'invention dans la phase initiale 1 ou terminale 6,
- la Fig.2 est une section selon la ligne 2-2 de la Fig.1,
- la Fig.3 est une section selon la ligne 3-3 de la Fig.1,
- la Fig.4 et une vue en élévation latérale du dispositif selon l'invention dans la phase 2 de positionnement,
- la Fig.5 est une section selon la ligne 5-5 de la Fig.4,
- la Fig.6 est une section selon la ligne 6-6 de la Fig.4,
- la Fig.7 est une vue en élévation latérale du disposotif selon l'invention dans la phase 3 de remplissage des moules intermédiaires et coiffage,
- la Fig.8 est une section selon la ligne 8-8 de la Fig.7,
- la Fig.9 est une vue en élévation latérale du dispositif selon l'invention dans la phase 4 de découpe du caillé,
- la Fig.10 est une section selon la ligne 10-10 de la Fig.9,
- la Fig.11 est une vue en élévation latérale du dispositif selon l'invention dans la phase 5 après rotation d'un pas,
- la Fig.12 est une section selon la ligne 12-12 de la Fig.11 et
- la Fig.13 est une vue en élévation latérale avec coupe partielle.

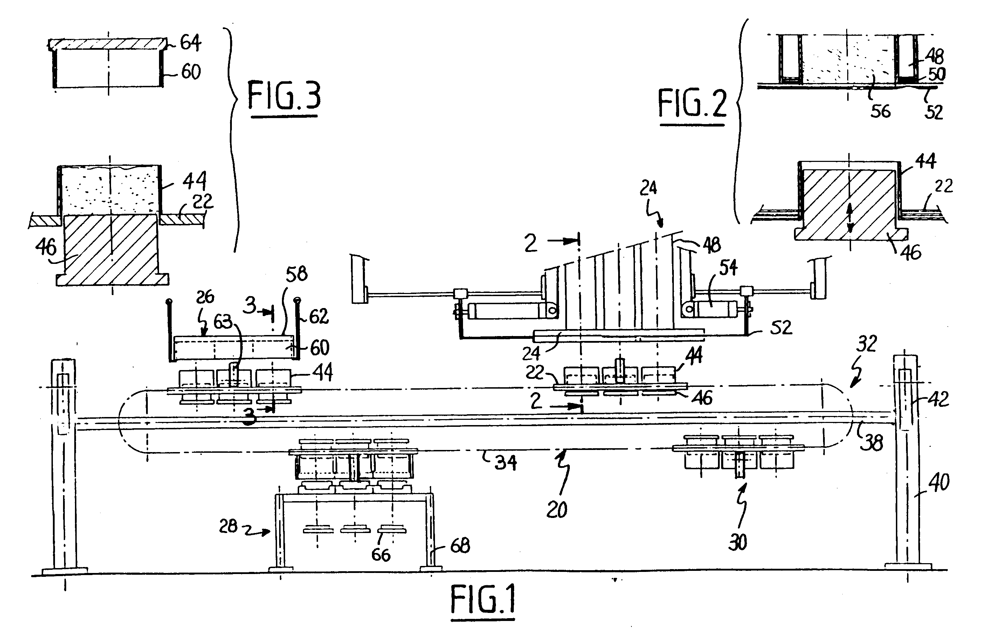

La Fig.1 représente un dispositif de remplissage et de retournement 20 de moules contenant du caillé et regroupés en plateaux 22 comprenant des postes de chargement 24, de mise en place de moules définitifs 26, de déchargement 28 et de recyclage 30.

Le dispositif de remplissage et de retournement 20 comprend des moyens de transport 32 du type à chaîne 34 en boucle fermée et couronnes d'entraînement (non figurées), sur lesquels sont fixés les plateaux 22 et un bâti 36 comprenant un ensemble de poutres 38 horizontales supportant les dits moyens de transport, fixés de façon mobile sur un ensemble de poteaux 40 de façon à réaliser un ascenseur-descenseur 42, mobile entre deux positions, haute et basse. La chaîne tourne dans un plan vertical et définit deux brins, supérieur et inférieur.

Les plateaux 22 comprennent des moules intermédiaires fixes 44 cylindriques dans le cas représenté dont chaque fond 46 est mobile par rapport au moule intermédiaire suivant son axe longitudinal, ainsi que cela est représenté en détail à la Fig.2.

Le poste de chargement 24 comprend des tubes d'alimentation et de moulage 48 dont l'extrémité inférieure 50 est munie de lames de coupe 52 mobiles dans un plan horizontal et dont l'axe longitudinal est orienté verticalement. Des moyens d'entraînement 54 comprenant des vérins et des glissières assurent les déplacements des lames de coupe. Celles-ci peuvent prendre deux positions : ouverte, dans laquelle elles sont effacées, et fermée, dans laquelle elles obturent les tubes d'alimentation et de moulage.

La position fermée est représentée à la Fig.2 sur laquelle est indiqué le caillé 56.

Le poste de mise en place des moules définitifs 26 comprend un ensemble 58 de moules définitifs 60 maintenu par des crochets 62 mobiles en rotation autour d'un axe de façon à prendre une position de dégagement.

Chaque moule définitif 60 est de forme complémentaire de celle des moules intermédiaires 44 de façon à pouvoir coiffer ceux-ci. Aussi, en position d'attente, maintenu et positionné par des crochets 62, le fond 64 est situé au-dessus de l'ouverture. De plus, chaque ensemble 58 est muni d'une liaison amovible 63 avec le plateau 22.

Le poste de déchargement 28 comprend des moyens de transfert 66, du type à bandes, disposés sur un bâti 68 dont l'orientation est sensiblement perpendiculaire à la direction de déplacement de la chaîne et des plateaux.

Le poste de recyclage 30 comprend des moyens pour réinitialiser la position des fonds mobiles et éventuellement des moyens de nettoyage. Ces moyens sont à la portée de l'homme de l'art du domaine considéré.

Les plateaux 22 sont disposés sur la chaîne à équidistance de façon à définir le pas d'avance. Les différents postes sont situés à équidistance également de façon à ce que, lors de chaque avance d'un pas de la chaîne, chaque plateau se retrouve en vis à vis d'un poste après initialisation du système, lors de la mise en marche.

Le fonctionnement de ce dispositif va maintenant être décrit également à l'aide des figures suivantes sur lesquelles les éléments identiques porteront les mêmes références numériques.

Sur la Fig.1, en phase 1, l'ascenseur-descenseur 42 est en position basse. Le premier plateau 22 est en vis à vis du poste de chargement. Le fond 46 est en position haute, les lames de coupe 52 sont en position fermée (cf Fig.2.). Les tubes d'alimentation et de moulage 48 sont remplis de caillé 56. L'ensemble 58 de moules définitifs est supporté par les crochets 62 au-dessus d'un deuxième plateau 22 dont les moules intermédiaires 44 sont remplis de caillé (cf Fig.3). Les moyens de transfert 66 du poste de chargement 28 sont à l'arrêt et reçoivent un ensemble 58 de moules définitifs pleins, désolidarisé d'un troisième plateau 22. Quant au poste de recyclage 30, il comprend un quatrième plateau 22 dont les moules intermédiaires ont un fond en position basse par rapport au plateau.

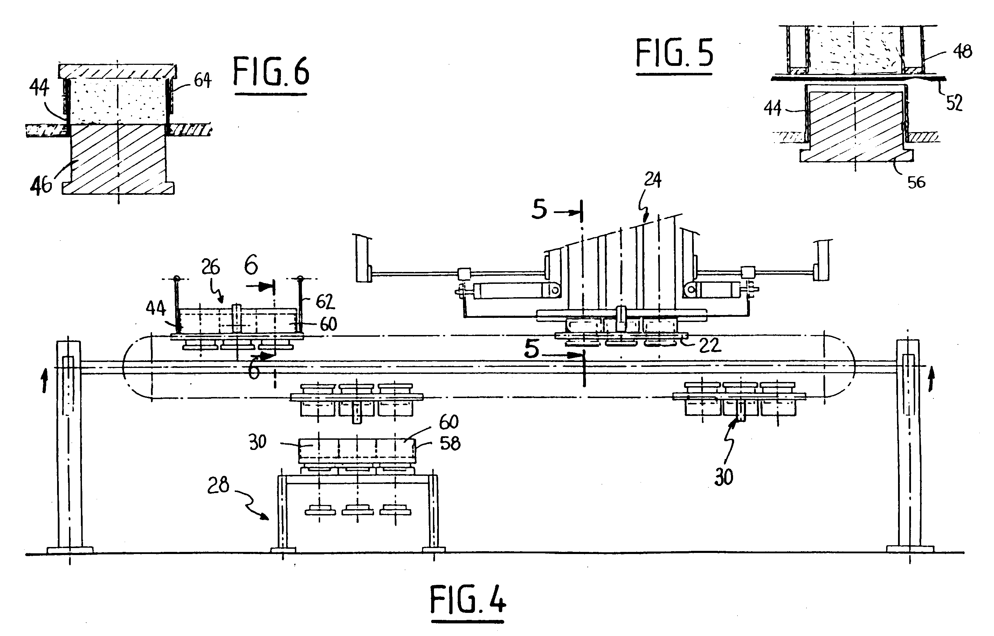

Lors de la phase 2, représentée à la Fig.4, l'ascenseur-descenseur 42 est en position haute et le passage de la position basse à la position haute a provoqué certaines modifications : le premier plateau 22 est à proximité du poste de chargement et les moules intermédiaires 44 sont disposés immédiatement au-dessous des lames 52, les fonds mobiles 44 étant en position haute, ainsi que représenté à la Fig.5.

Les moules définitifs 60 viennent coiffer les moules intermédiaires 44 du deuxième plateau, ainsi que représenté à la Fig.6, le fond des moules définitifs venant en contact avec la face supérieure de la portion de caillé. Les moules définitifs 60 du troisième plateau reposent sur les moyens de transfert du poste de déchargement.

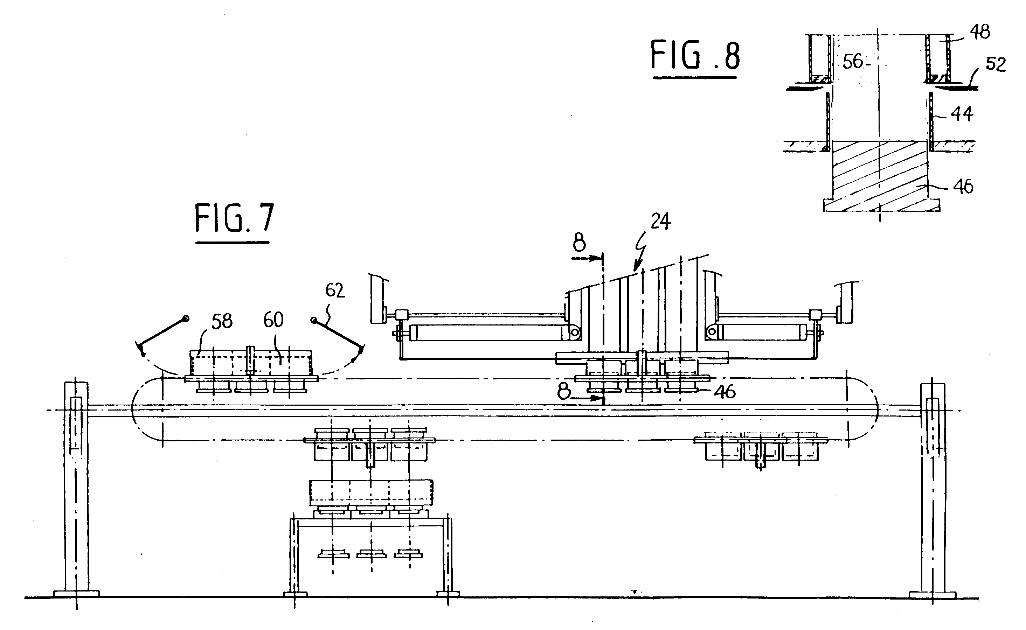

A la Fig.7, lors de la phase 3, les lames de coupe 52 sont en position ouverte, ainsi que représenté en détail à la Fig.8, et le caillé 56 descend par gravité avec le fond mobile 46 jusqu'à définir un volume pré-établi avec le moule intermédiaire, le déplacement du fond pouvant être piloté ou assisté par tout moyen adapté : ressort, vérin hydraulique ou pneumatique.

Simultanément, les crochets 62 sont écartés pour libérer l'ensemble 58 de moules définitifs sur les moules intermédiaires du deuxième plateau.

Les moules définitifs du troisième plateau qui reposent sur les moyens de transfert 66 peuvent être évacués par mise en marche de ces moyens de transfert.

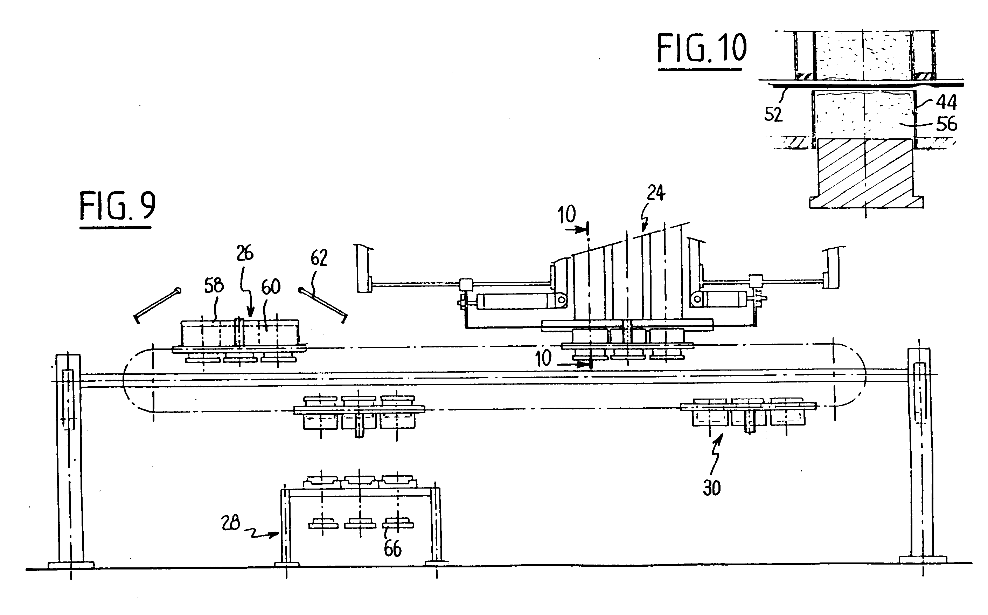

Lors de la phase 4, représentée à la Fig.9, les lames de coupe 52 sont remenées en position fermée ce qui provoque la découpe du caillé à ras du moule intermédiaire de façon à définir une portion de caillé, ainsi que représenté à la Fig.10.

Les moules définitifs 60 du deuxième plateau sont solidarisés à ce dernier par des doigts 63, les crochets 62 restant en position écartée.

Quant aux moules définitifs 60 du troisième plateau, ils ont été évacués.

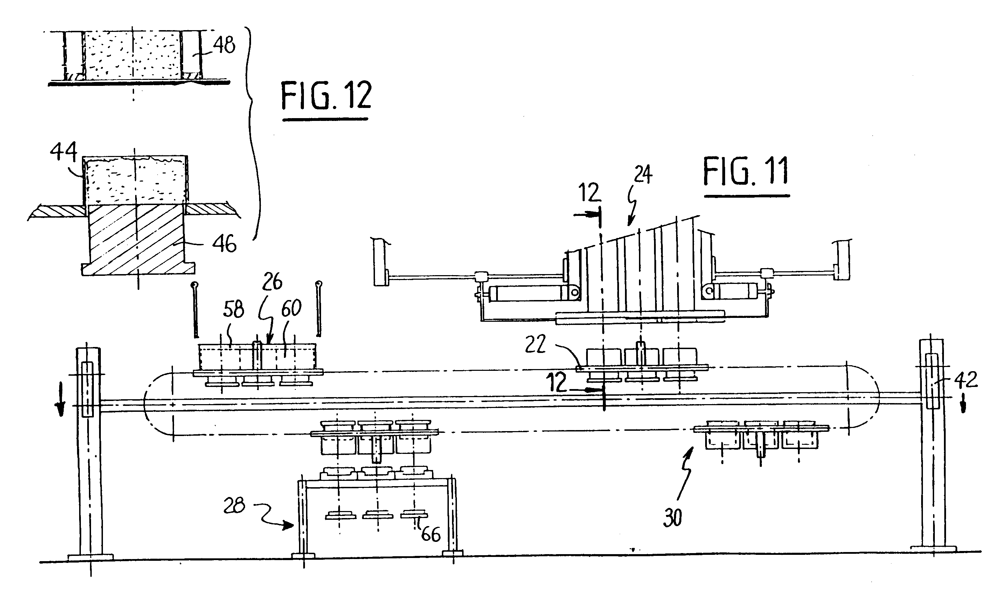

La phase 5, représentée à la Fig.11, consiste à déplacer vers le bas le bâti 36 au moyen de l'ascenseur-descenseur, ce qui dégage l'ensemble des premier et deuxième plateaux des postes de chargement 24 (cf Fig.12) et de mise en place des moules définitifs 26 et rapproche le troisième plateau du poste de déchargement.

La phase 6 suivante est identique à la phase 1, mais, entre les deux, la chaîne a été déplacée d'un pas.

Entre le poste de mise en place des moules définitifs 26 et le poste de déchargement, le deuxième plateau passe du brin supérieur de la chaîne au brin inférieur, ce qui provoque le retournement de la portion de caillé qui, en appui sur le fond 46 des moules intermédiaires, vient en appui sur le fond des moules définitifs 60 sans mouvement relatif de la portion de caillé par rapport à ces mêmes moules, intermédiaire et/ou moule définitif.

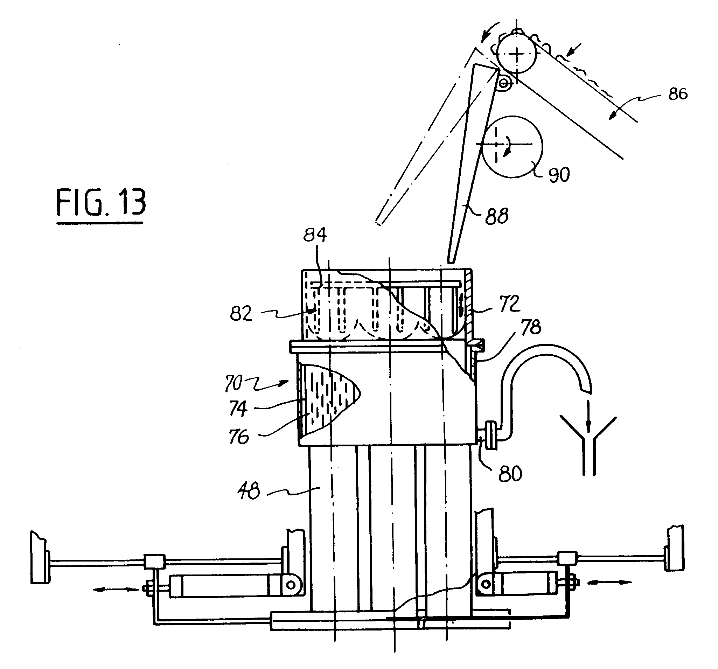

La Fig.13 représente les tubes de moulage 48 surmontés de moyens répartiteurs 70. Ces moyens comprenant une trémie 72 à double paroi dont la paroi interne 74 est munie de perforations 76 de façon à permettre la séparation du sérum et du caillé par égouttage, l'espace annulaire entre cette paroi et la paroi externe 78 étant muni d'une évacuation 80 en point bas avec possibilité de réglage du niveau du sérum.

A la partie supérieure de la trémie sont prévus des moyens d'égalisation 82 comprenant un râteau 84 règlable en déplacement horizontal et vertical.

Les moyens répartiteurs 70 comprennent, en outre, une goulotte d'alimentation 86 dont l'extrémité 88 est articulée et déplaçable alternativement au moyen d'un came 90 de façon à alimenter en caillé toute la surface de la trémie.

L'invention qui vient d'être décrite présente de nombreux avantages, notamment celui de permettre la production en continu de caillé moulé en portion et retourné en supprimant tous chocs. De plus, les pertes lors de la coupe ou lors du retournement sont supprimées.

L'égouttage est également poursuivi durant toutes les phases de fabrication.

Le fromage fini après saumurage et éventuel affinage présente d'excellentes caractéristiques intrinsèques.

Le déroulement en temps masqué des différentes étapes améliore notablement la productivité déjà améliorée par le faible taux de rebus.

## Revendications

1. Dispositif de remplissage et de retournement automatique de moules contenant du caille égoutté lors de la fabrication de fromages, comprenant un poste de chargement (24) composé de tubes (48) d'alimentation et de moulage du caille égoutté par gravité, munis de lames (52) de coupe et d'obturation disposées à leurs extrémités (50), des moules intermédiaires (44) et des moules définitifs (60) destinés à recevoir les portions de caille égoutté venant respectivement de tubes de moulage et des moules intermédiaires, caractérisé en ce qu'il comprend des moyens de transport (32) se déplaçant suivant une boucle fermée orientée dans un plan vertical sur lesquels sont fixés et régulièrement espaces les moules intermédiaires (44) comprenant un fond (46) mobile suivant l'axe longitudinal dudit moule, et définissant deux brins horizontaux, supérieur et inférieur, un poste de mise en place des moules définitifs (26) vides disposé au-dessus du brin supérieur et un poste (28) de déchargement des moules définitifs (60) remplis disposé au-dessous du brin inférieur, lesdits moyens de transport comportant en outre un élévateur-descenseur (42) mobile entre deux positions haute et basse de façon à rapprocher alternativement le brin supérieur des postes de chargement (24) et de mise en place des moules définitifs (26) et le brin inférieur du poste de déchargement des moules definitifs (28).

2. Dispositif selon la revendication 1, caractérisé en ce que les moules définitifs (60)ont un profil complémentaire de celui des moules intermédiaires (44) de façon que les moules définitifs coiffent les moules intermédiaires.

3. Dispositif selon la revendication 2, caractérisé en ce que les moules définitifs (60) et les moules intermédiaires (44) comprennent des moyens d'accrochage amovibles qui coopèrent entre eux de façon à solidariser les dits moules définitifs et les dits moules intermédiaires.

4. Dispositif selon l une quelconque des revendications précédentes, caractérisé en ce que les moyens de transport (32) en boucle fermée comprennent une chaîne (34) tendue entre deux couronnes et des moyen d'entraînement.

5. Dispositif selon l une quelconque des revendications précédentes, caractérisé en ce que les moules intermédiaires (44) et définitifs (60) sont groupés par plateaux (22) répartis à équidistance les uns des autres, la distance entre deux plateaux définissant le pas d avance.

6. Dispositif selon l'une quelconque des revendications précédentes, caractérisé en ce qu'il comprend un poste de recyclage (30) situé entre les postes de déchargement (28) et de chargement (24).

7. Dispositif selon l'une quelconque des revendications précédentes, caractérisé en ce que les différents postes (24 , 26, 28 et 30) sont disposés parallèlement au moyen de transport (32) avec un pas identique à celui des plateaux de façon à ce que, à l'arrêt, chaque plateau soit en vis à vis d'un poste.

8. Dispositif selon l'une quelconque des revendications précédentes, caractérisé en ce que le poste (26) de mise en place des moules définitifs (60) comprend un plateau (22) de moules définitifs disposé de façon à ce que les dits moules soient en vis à vis des moules intermédiaires.

9. Dispositif selon l'une quelconque des revendications précédentes, caractérisé en ce que le poste de chargement (24) comprend des tubes (48) de moulage surmontés de moyens répartiteurs (70) de caillé.

10. Dispositif selon la revendication 9, caractérisé en ce que les moyens répartiteurs (70) comprennent une trémie (72) à double paroi dont la paroi interne (74) est munie de perforations (76) de façon à permettre la séparation du sérum du caillé par égouttage, des moyens d'évacuation (80) du sérum de la dite trémie et des moyens d'égalisation (82) et une goulotte mobile (86).

11. Dispositif selon la revendication 10, caractérisé en ce que les moyens d'égalisation (82) comprennent un râteau (84) réglable en déplacement horizontal et vertical.

## Claims

1. Device for the filling and automatic turning, during cheese production, of moulds containing drained curds, comprising a loading station (24) composed of tubes (48) for the feeding and moulding of drained curds by gravity, the tubes being provided with blades (52) for cutting and stopping disposed at their ends (50), intermediate moulds (44) and final moulds (60) intended for receiving the portions of drained curds coming respectively from the moulding tubes and intermediate moulds, characterised in that it comprises transport means (32) moving in a closed loop oriented in a vertical plane, on which are fixed and regularly spaced the intermediate moulds (44) comprising a base (46) movable along the longitudinal axis of said mould, and defining two horizontal strands, upper and lower, a positioning station for the empty final moulds (26) disposed above the upper strand, and an unloading station (28) for the filled final moulds (60) disposed below the lower strand, said transport means comprising in addition a lifting-lowering device (42) movable between two positions, high and low, so as alternately to bring the upper strand near to the loading stations (24) and the positioning stations of the final moulds (26) and the lower strand near to the discharge station of the final moulds (28).

2. Device according to claim 1, characterised in that the final moulds (60) have a complementary profile to that of the intermediate moulds (44) so that the final moulds cover the intermediate moulds.

3. Device according to claim 2, characterised in that the final moulds (60) and the intermediate moulds (44) comprise detachable engagement means which cooperate with each other so as to join said final moulds and said intermediate moulds.

4. Device according to any one of the preceding claims, characterised in that the transport means (32) in a closed loop comprises a chain (34) stretched between two pulley rims and drive means.

5. Device according to any one of the preceding claims, characterised in that the intermediate moulds (44) and final moulds (60) are grouped by plates (22) distributed equidistantly from each other, the distance between two plates defining the advancing step.

6. Device according to any one of the preceding claims, characterised in that it comprises a recycling station (30) situated between the unloading stations (28) and loading stations (24).

7. Device according to any one of the preceding claims, characterised in that the different stations (24, 26, 28 and 30) are disposed in parallel to the transport means (32) at an identical step to that of the plates so that when stopped each plate is face to face with a station.

8. Device according to any one of the preceding claims, characterised in that the positioning station (26) for the final moulds (60) comprises a plate (22) of final moulds disposed so that said moulds are face to face with the intermediate moulds.

9. Device according to any one of the preceding claims, characterised in that the loading station (24) comprises moulding tubes (48) surmounted by means (70) for distributing curds.

10. Device according to claim 9, characterised in that the distributing means (70) comprises a double-walled hopper (72), the internal wall (74) of which is provided with perforations (76) so as to allow the separation of the whey from the curds by draining, evacuation means (80) for the whey from said hopper and levelling means (82) and a movable spout (86).

11. Device according to claim 10, characterised in that the levelling means (82) comprises a rake (84) which can be regulated in horizontal and vertical displacement.

## Patentansprüche

1. Vorrichtung zum Füllen und automatischen Umdrehen von abgetropfte Sauermilch enthaltenden Formen bei der HerStellung von Käsen, mit einem Beladestand (24), der sich aus Rohren (48) zum Zuführen und Formen der abgetropften Sauermilch durch Schwerkraft zusammensetzt, die mit an ihren Enden (50) angeordneten Schneid- und Abschließklingen (52) versehen sind, Zwischenformen (44) und Endformen (60), die zur Aufnahme der aus den Formrohren bzw. Zwischenformen kommenden Portionen abgetropfter Sauermilch bestimmt sind, dadurch gekennzeichnet, daß sie in einer in einer vertikalen Ebene orientierten geschlossenen Schleife sich bewegende Transportiermittel (32), auf denen in regelmäßigen Abständen die Zwischenformen (44), welche einen in Richtung der Längsachse der Form beweglichen Boden (46) aufweisen, befestigt sind, und die zwei horizontale, obere und untere, Abschnitte definieren, einen über dem oberen Abschnitt angeordneten Stand (26) zum Anbringen leerer Endformen und einen unter dem unteren Abschnitt angeordneten stand (28) zum Abladen gefüllter Endformen (60) aufweist, wobei die Transportiermittel ferner einen zwischen einer oberen und unteren Stellung bewegbaren Heber-Senker (42) aufweisen, derart, daß abwechselnd der obere Abschnitt den Ständen zum Beladen (24) und zum Anbringen (26) der Endformen und der untere Abschnitt dem Stand (28) zum Abladen der Endformen angenähert wird.

2. Vorrichtung nach Anspruch 1, dadurch gekennzeichnet, daß die Endformen (60) einen zu demjenigen der Zwischenformen (44) komplementären Umriß haben, derart, daß die Endformen die Zwischenformen überdecken.

3. Vorrichtung nach Anspruch 2, dadurch gekennzeichnet, daß die Endformen (60) und die Zwischenformen (44) lösbare. Einhängmittel aufweisen, die so zusammenwirken, daß die Endformen und die Zwischenformen aneinander festgelegt werden.

4. Vorrichtung nach irgendeinem der vorstehenden Ansprüche, dadurch gekennzeichnet, daß die Mittel (32) zum Transportieren in geschlossener Schleife eine zwischen zwei Kränzen gespannte Kette (34) und Antriebsmittel aufweisen.

5. Vorrichtung nach irgendeinem der vorstehenden Ansprüche, dadurch gekennzeichnet, daß die Zwischenformen (44) und Endformen (60) durch Tabletts (22) gruppiert sind, die in gleichen Abständen voneinander verteilt sind, wobei der Abstand zwischen zwei Tabletts den Vorschubschritt bestimmt.

6. Vorrichtung nach irgendeinem der vorstehenden Ansprüche, dadurch gekennzeichnet, daß sie einen zwischen dem Abladestand (28) und Beladestand (24) liegenden Rezyklierstand (30) aufweist.

7. Vorrichtung nach irgendeinem der vorstehenden Ansprüche, dadurch gekennzeichnet, daß die einzelnen Stände (24, 26, 28 und 30) parallel zu den Transportiermitteln (32) mit gleichem Schritt wie demjenigen der Tabletts angeordnet sind, derart, daß im Halt jedes Tablett vor einem Stand liegt.

8. Vorrichtung nach irgendeinem der vorstehenden Ansprüche, dadurch gekennzeichnet, daß der stand (26) zum Anbringen der Endformen (60) ein Tablett (22) Von Endformen aufweist, dar so angeordnet ist, daß diese Formen vor den Zwischenformen liegen.

9. Vorrichtung nach irgendeinem der vorstehenden Ansprüche, dadurch gekennzeichnet, daß der Beladestand (24) Formrohre (48), welche von Verteilungsmitteln (70) für die Sauermilch überragt werden, aufweist.

10. Vorrichtung nach Anspruch 9, dadurch gekennzeichnet, daß die Verteilungsmittel (70) einen doppelwandigen Trichter (72), dessen Innenwand (74) mit Perforationen (76) versehen ist, derart, daß das Serum der Sauermilch durch Abtropfen abgetrennt werden kann, Mittel (80) zum Abziehen des Serums aus dem Trichter und Mittel zum Ausgleichen (82) und eine bewegliche Rutsche (86) aufweisen.

11. Vorrichtung nach Anspruch 10, dadurch gekennzeichnet, daß die Ausgleichsmittel (82) einen horizontal und vertikal verschiebbaren Rechen (84) aufweisen.
